# EUROPEAN PATENT APPLICATION

(11) **EP 4 843 687 A1**
(43) Date of publication of application: **25.11.2026**
(21) Application number: 25177565.6
(22) Date of filing: 20.05.2025
(51) Int. Cl.: B22F 1/12, C22C 33/02, B23K 26/342, C22C 38/22, C22C 38/26, C22C 38/28, C22C 38/32, F16D 65/12

(54) **IRON-BASED ALLOYS FOR USE AS MONOLAYER COATINGS FOR BRAKE DISCS**

(71) Applicant: Höganäs AB (publ), 263 83 Höganäs (SE)
(72) Inventor: Maroli, Barbara, 26332 Höganäs (SE); Bigdeli, Sedigheh, 26337 Höganäs (SE); Memarpour, Arashk, 25450 Helsingborg (SE)
(74) Representative: Höganäs AB (publ)

(57) **Abstract**

In the field of iron alloys there is herein presented novel iron alloys suitable for use as monolayer coatings for brake discs therein characterized that such alloys can be applied to the surfaces of cast iron brake discs at high velocity using industrial laser cladding methods while providing a dense, durable and corrosion resistant cladding monolayer.

## Description

### TECHNICAL FIELD

In the field of iron-based alloys there is herein presented novel iron-based alloys suitable for use as monolayer coatings for brake discs therein characterized that such alloys can be applied to the surfaces of cast iron brake discs at high velocity using industrial laser cladding methods while providing a dense, durable and corrosion resistant cladding monolayer.

### BACKGROUND

Particulate matter (PM) in the atmosphere is an important component of air pollution having negative effects on public health. One of the most significant contributors to air pollution is emission from motor vehicles including exhaust emissions and non-exhaust emissions created e.g., through brake, tire and general vehicle wear followed by the resuspension and aerosolization of wear particles deposited on the road. To counter these problems, brake discs and brake pads producers as well as car manufacturers are looking for possible solutions to reduce PM emissions to the atmosphere, in general including emissions due to brake wear. Manufacturers have identified that to minimize the dusting, the brake discs need to be made rust resistant and/or more corrosion resistant, and the wear rate of the brake discs must be significantly reduced.

In the current art, laser cladded bilayer coating solutions have become state of the art for premium cars, where manufacturing costs are of less concern. Herein the problem of tailoring iron-based alloys to being both corrosion resistant and wear resistant at the same time can be split into solving the individual problems in a first, typically soft and ductile, corrosion resistant layer with good binding properties to the underlying brake disc (typically cast iron) and a second braking layer with good wear resistance. However, as current bi-layer solutions are expensive from a manufacturing perspective, there is a pull from the brake disc manufacturers to develop monolayer coatings for reducing production costs.

However, in this developing technological field, development of laser-clad monolayer coatings for brake discs requires both process and material developments and improvements for overcoming the known drawbacks of existing monolayer brake disc coating technology, in particular the observed lack of corrosion resistance has proven to be a priority problem for monolayer coatings.

One of the main hurdles with current monolayer coatings is the necessary coating thickness of between 80-400 µm. Herein the thickness of the layer, in itself, increases the risk for formation of pores at the interface between the coating and the cast iron brake disc during manufacturing due to propagation of manufacturing faults through the extended cladding process necessary for manufacturing a thicker coating. Other challenges with monolayer coatings include the target thickness from automotive industry which currently is on the order of 80 - 200 µm, corrosion and wear resistance demands must be met in one layer. Also, as will be discussed below, residual graphite in the cast iron brake discs cause formation of large pores, sometimes extending across the monolayer coating, a serious source for corrosion; crystal structural mismatch between the coating material and the cast iron causes cracks already for very small amounts of hard phase, both if solidified from the melt or admixed, which again is a serious source of corrosion.

For solving the abovementioned and further technical problems the present inventors herein suggest novel, iron-based alloys suitable for the intended use. Such iron-based alloys are desirable for being, *inter alia,* economically competitive compared to higher cost ceramic coatings for the use in mass produced brake discs, and in the art, this use has previously been suggested by other inventors (c.f. e.g., WO2021007209) for other iron-based alloys.

A further problem of the laser cladding alloys of the prior art is their reliance on a high chromium content for providing the necessary corrosion resistance such cladding layers must have for their functionality. It is a particular goal of the present alloys to lower the chromium content over the chromium contents of prior art cladding layers and alloys therefore.

### SUMMARY OF THE INVENTION

In accordance with the herein detailed invention the above technical problems can be solved, at least partially, by the provision of an iron-chrome based alloy consisting of, by total weight of the alloy:

| | |
|---|---|
| chromium (Cr) : | 16.5 - 19.0 wt%, |
| silicon (Si) : | 0.65 - 1.35 wt%, |
| manganese (Mn) : | 0.10 - 0.80 wt%, |
| niobium (Nb) : | 0.85 - 2.15 wt%, |
| boron (B) : | 0.35 - 0.65 wt%, |
| carbon (C) : | 0.05 - 0.20 wt%, |
| nitrogen (N) : | below 0.15 wt%, |

and optionally:

| | |
|---|---|
| molybdenum (Mo): | below 1.2 wt%, and/or |

from 0.10 wt% to 2.2 wt% of at least one metallic element promoting equiaxed grain formation during alloy melt solidification;
the balance being iron (Fe) and incidental impurities below 0.2 wt%.

In preferred embodiments, the iron-chromium based alloy contains from 0.15 wt% to 2.2 wt% of the optional at least one metallic element promoting equiaxed grain formation during alloy melt solidification, particularly either one or both of aluminum or titanium.

In such cases, the iron-based alloy should contain one or more of in amounts based on total weight of the alloy of:

| | |
|---|---|
| aluminum (Al) : | 0.55 - 1.40 wt%, and/or |
| titanium (Ti) : | 0.10 - 0.80 wt%. |

Preferably, if titanium (Ti) is present, the ratio of niobium (Nb) to titanium (Ti) is from 1.5 to 6.0.

### BRIEF DESCRIPTION OF THE DRAWINGS

- **Figure 1:**: Examples of cladding defects (LOM). **A** - Bilayer. **B** - SFSS-Monolayer of the prior art.
- **Figure 2:**: Coating examples of the present alloys (LOM). **A** - Coating without Al or Ti. **B** - Coating with Al. **C** - Coating with Ti.
- **Figure 3:**: Visual inspection of surface cracks. **A** - SFSS-monolayer numerous visible surface cracks **B** - Present alloy - no visible surface cracks.
- **Figure 4:**: Full cross-section of coated brake discs with respectively: **A** - Composition C3, **B** - Composition C4, **C** - Composition C5.
- **Figure 5:**: Euler-map of composition C1 with hard-phase particles inclusions.
- **Figure 6:**: Euler-map of compositions C1, C1 with hard-phase particles inclusions, C3 and C5.
- **Figure 7:**: Results for 48 h salt-spray testing (NSS), **A** - C1, **B** - C2.
- **Figure 8:**: Surface-coatings with hard-phase particles, C2 with **A** - 5 wt% WC or **B** - 5 wt% Cr₂C₃.
- **Figure 9:**: C2 with Cr₂C₃ salt-spray tested (NSS) for 24h.
- **Figure 10:**: Plot of columnar to equiaxed transition with and without Al and/or Ti.

It is to be understood that the embodiments shown in the figures are for illustration of the present invention and cannot be construed as limiting the present invention. Unless otherwise indicated, the drawings are intended to be read (e.g., cross-hatching, arrangement of parts, proportion, degree, etc.) together with the specification, and are to be considered a portion of the entire written description of this disclosure.

### DETAILED DESCRIPTION

As discussed in the herein below experimental section, the objectives of the present invention can be met by the procurement of an iron-chromium based alloy consisting of, by total weight of the alloy:

| | |
|---|---|
| chromium (Cr) : | 16.5 wt% - 19.5 wt%, |
| silicon (Si) : | 0.65 wt% - 1.35 wt%, |
| manganese (Mn) : | 0.10 wt% - 0.80 wt%, |
| niobium (Nb) : | 0.85 wt% - 2.15 wt%, |
| boron (B) : | 0.35 wt% - 0.65 wt%, |
| carbon (C) : | 0.05 wt% - 0.20 wt%, |
| nitrogen (N) : | below 0.15 wt%, |

and optionally:

| | |
|---|---|
| molybdenum (Mo): | below 1.20 wt%, and/or |

from 0.10 wt% to 2.2 wt% of at least one metallic element promoting equiaxial grain formation during alloy melt solidification;
the balance being iron (Fe) and incidental impurities below 0.2 wt%.

As documented by the present experiments, the above alloy is a stainless-steel alloy having high corrosion resistance together with a hardness measured as HV0.3 in a suitable range for use as a monolayer coating in the brake disc industry. In the experiments it was observed that the present alloys are resistant to contamination by oxygen and nitrogen during atomization, which is a particular benefit of the present alloys, significantly reducing the manufacturing cost for providing powders of the present alloys for use in laser cladding brake discs for the brake disc industry. Likewise, it was shown how the alloys of the present invention are less prone to the formation of gas-bubble defects in the coated monolayers over commercially available comparative alloys.

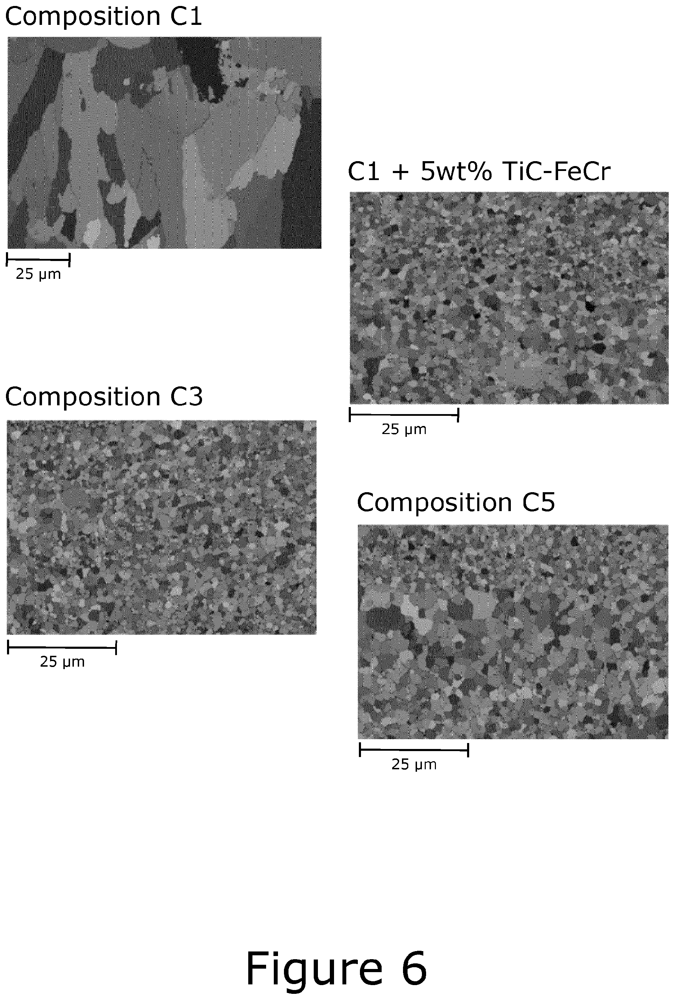

In accordance with the present invention, the alloys of the present invention preferably contain from 0.15 wt% to 2.2 wt% of at least one metallic element promoting equiaxed grain formation during alloy melt solidification. As evidenced by the experiments, the iron-chromium based alloys of the present invention not containing an added metallic element promoting equiaxed grain formation during alloy melt solidification in the herein discussed amounts, such alloys deposit after laser cladding as rather large grains with a marked axial characteristic (c.f. Figure 6) and softening these larger grains by the addition of at least one metallic element promoting equiaxed grain formation during alloy melt solidification was found to significantly improve the quality of the laser cladded monolayers on the examined brake discs. Additionally, such alloys also benefit from a default free inclusion of hard-phase particles, something which the alloys without the equiaxed grain promoter metal do not do in all depositions under the experimental conditions presented herein.

In particular it was found that aluminum and titanium excelled as the metallic element promoting equiaxed grain formation during alloy melt solidification, and consequently in the preferred embodiments of the present invention the metallic element promoting equiaxed grain formation during alloy melt solidification is selected from one or both of aluminum (Al) or titanium (Ti). When titanium (Ti) is present, the ratio of niobium (Nb) to titanium (Ti) preferably is from 1.5 to 6.0. The present inventors speculate without considering themselves bound by these speculations, that since the electronegativity (Pauling scale : PS) and atomic radius (AR) of aluminum (PS 1.61; AR 143 pm), titanium (PS 1.54; AR 147 pm), and niobium (PS 1.6; AR 146) are comparable, the addition of either of aluminum and/or titanium to the alloys of the present invention aid in the integration of niobium into the solidifying melt after laser cladding, thereby increasing the number of nucleation sites and consequently promoting equiaxed grain formation during melt solidification.

To the best of the present inventors' knowledge, the use of aluminum (Al) and/or titanium (Ti) as a metallic element promoting equiaxed grain formation during alloy melt solidification of a niobium-containing iron-chromium stainless-steel alloy has not previously been disclosed in the art of laser-cladding stainless-steel monolayers for automotive brake discs.

In preferred embodiments of the iron-chromium based alloy according to any preceding invention, the iron-chromium based alloy contains at least one of aluminum (Al) in an amount from 0.15 wt% to 1.40 wt%, and/or titanium (Ti) in an amount from 0.10 wt% to 0.80 wt%.

According to the invention it was found that the content of aluminum, when present in the iron-chromium based alloys of the invention, could be varied freely within the concentration range from 0.15 wt% to 1.40 wt%. Above of this concentration range unwanted secondary solid phases would start to form leading to a degeneration of the formed cladded layers. Below 0.15 wt% aluminum, no influence of the addition of aluminum could be detected and the elements essentially contributed to the alloys as an incidental impurity.

Preferably, aluminum is added to the alloys of the present invention in a concentration from 0.4 wt% to 1.40 wt%, more preferably from 0.55 wt% to 1.30 wt%, and even more preferably from 0.60 wt% to 1.20 wt%. As documented in the experiments, varying the concentration in the interval from 0.6 wt% to 1.20 wt% was equally suitable for the desired outcome. Accordingly, in embodiments of the invention, the concentration of aluminum can be any of the following concentrations with equal outcome, namely 0.55 wt%, 0.60 wt%, 0.65 wt%, 0.70 wt%, 0.75 wt%, 0.80 wt%, 0.85 wt%, 0.90 wt%, 0.95 wt%, 1.00 wt%, 1.05 wt%, 1.10 wt%, 1.15 wt%, 1.20 wt%, 1.25 wt% or 1.30 wt%, or freely combined to form a subrange of the most preferred range of 0.60 wt% to 1.20 wt% aluminum (Al).

According to the invention there is herein detailed, the iron-chromium based alloy according to any embodiment detailed herein containing, if titanium is present, from 0.10 wt% to 0.80 wt%, preferably from 0.20 wt% to 0.70 wt%, and more preferably from 0.25 wt% to 0.65 wt% of titanium (Ti). Inside the concentration range from 0.20 wt% to 0.65 wt% of titanium, no particular improvement to the desired properties of the cladding layers were discernible, and consequently the concentration of titanium can be any of the following concentrations with equal outcome, namely 0.25 wt%, 0.30 wt%, 0.35 wt%, 0.40 wt%, 0.45 wt%, 0.50 wt%, 0.55 wt%, 0.60 wt%, or 0.65 wt%, or freely combined to form a subrange of the most preferred range of 0.25 wt% to 0.65 wt% titanium (Ti).

Surprisingly, it was observed that niobium and titanium beneficially can be co-adjusted such that improved properties of the clad layers can be obtained when the ratio of niobium (Nb) to titanium (Ti) is from 1.5 to 6.0, and in preferred embodiments from 2.0 to 4.0.

As evidenced by the hard-phase particle addition experiments, it is possible to add both aluminum and titanium to the alloys of the invention with good results, providing that the total amount of aluminum and titanium does not exceed 2.2 wt% in the alloys of the invention. Inside this concentration range, the addition of hard-phase particles was found to be possible without layer rupture due to the presence of the hard-phase particles, permitting the hard-phase particles to provide a contribution, in the form of an increase, to the overall hardness of the cladded layers of the invention.

In accordance with the present invention, the iron-chromium based alloys according to the invention may contain chromium (Cr) from 16.5 wt% to 19.5 wt%. This range of chromium content is rather narrow and was found to have an optimum at about 18 wt%, within the accuracy of the experiments. A working range of about 3 wt% chromium nevertheless is beneficial from a manufacturing perspective to counter chromium fluctuations in the prepared products.

However, as the chromium content is comparatively low for stainless steels, the present alloys provide a significant improvement over the prior art stainless steels for laser cladding brake discs, where current formulations have a chromium content on the order of about 26 wt% chromium.

The chromium content of the alloys of the present invention can be from 16.5 wt% to 19.5 wt%. Preferably the chromium content of the present alloys is 16.8 wt% to 19.3 wt%, from 17.0 wt% to 19.0 wt%, preferably from 17.2 wt% to 18.8 wt%, and more preferably from 17.3 wt% to 18.7 wt%. In the concentration range from 17.3 wt% to 18.7 wt%, the improvements to changing the chromium concentration towards the optimal 18 wt% are smaller as the alloys in this range are more strongly influenced by other elements of the present alloys than the chromium content and consequently, the chromium content may be selected freely in the range from 17.3 wt% to 18.7 wt%, such as may be selected to be 17.4 wt%, 17.5 wt%, 17.6 wt%, 17.7 wt%, 17.8 wt%, 17.9 wt%, 18.0 wt%, 18.1 wt%, 18.2 wt%, 18.3 wt%, 18.4 wt%, 18.5 wt%, 18.6 wt% or 18.7 wt%, or freely combined to form a subrange of the most preferred range of 17.3 wt% to 18.7 wt% chromium (Cr). In the present context it is further beneficial that there is a certain robustness in the chromium concentration around the optimum of 18.0 wt%, since this allows for simpler manufacturing when chromium can be dosed with less precision, thereby minimizing costs.

In accordance with the present invention, the iron-chromium based alloys according to the invention may contain silicon (Si) from 0.65 wt% to 1.35 wt%, preferred from 0.70 wt% to 1.30 wt% or from 0.85 wt% to 1.25 wt%. More preferred the silicon content is from 0.90 wt% to 1.20 wt%, more preferred from 0.95 wt% to 1.15 wt%, or even more preferred from 1.00 wt% to 1.10 wt%. Inside the concentration range from 0.95 wt% to 1.15 wt% silicon, no significant improvements to selecting a particular concentration of silicon were observed in the experiments. In the context of the present invention, this is further beneficial as the content of silicon in this range can be dosed with less precision, thereby minimizing costs.

In accordance with the present invention, the iron-chromium based alloys according to the invention may contain manganese (Mn) from 0.10 wt% to 0.80 wt%. Preferred, the content of manganese is from 0.25 wt% to 0.70 wt%, more preferred from 0.27 wt% to 0.65 wt%, and even more preferred from 0.30 wt% to 0.60 wt%. Inside the concentration range from 0.25 wt% to 0.70 wt% manganese, no significant improvements to selecting a particular concentration of manganese were observed in the experiments. In the context of the present invention, this is further beneficial as the content of manganese in this range can be dosed with less precision, thereby minimizing costs.

In accordance with the present invention, the iron-chromium based alloys according to the invention may contain niobium (Nb) from 0.85 wt% to 2.15 wt%, preferred from 0.90 wt% to 2.10 wt%, more preferred from 0.95 wt% to 2.05 wt%, and even more preferred from 1.00 wt% to 2.00 wt%. In general, it was found that without the addition of titanium, niobium preferably was limited to from 0.95 wt% to 1.15 wt%, with an optimum of from 1.00 wt% to 1.10 wt% but when titanium is also present, the concentration of niobium could be increased with good results. As discussed above, preferably titanium and niobium are co-adjusted.

In accordance with the present invention, the iron-chromium based alloys according to the invention may contain boron (B) from 0.35 wt% to 0.65 wt%, preferably from 0.40 wt% to 0.60 wt%, and even more preferably from 0.45 wt% to 0.55 wt%. The presence of titanium was found to require boron in an amount of at least 0.40 wt% to avoid clogging during gas atomizing, but not during vacuum atomization. But, in itself, a lower concentration of boron in the presence of titanium had no influence on the quality of the cladded monolayers. However, when titanium is present, the concentration boron preferably is at least 0.40 wt% to avoid nozzle clogging during gas atomizing.

In accordance with the present invention, the iron-chromium based alloys according to the invention may contain carbon (C) in an amount from 0.05 wt% to 0.20 wt%, from 0.06 wt% to 0.18 wt%, from 0.07 wt% to 0.17 wt%, preferably from 0.08 wt% to 0.16 wt%, preferably from 0.085 wt% to 0.155 wt%, more preferably from 0.090 wt% to 0.150 wt%, or even more preferably from 0.095 wt% to 0.145 wt%.

In accordance with the present invention, the iron-chromium based alloys according to the invention may contain molybdenum (Mo) below 1.20 wt% as a neutral alloying element. In general, it was observed that molybdenum did not negatively influence the properties of the alloys of the invention when the concentration of molybdenum was kept below 1.20 wt% but also no positive influence on the alloying properties of adding molybdenum was observed. Accordingly, the concentration of molybdenum can be freely varied in the interval from 0.05 wt% to 1.20 wt%. The present inventors consider it highly beneficial that some molybdenum can be contained in the present alloys without influencing the coating properties, as the presence of molybdenum above 0.05 wt% increases the corrosion resistance of the present monolayers. Accordingly, when molybdenum is present, preferably it is present from 0.10 wt%, from 0.20 wt%, from 0.30 wt%, more preferably from 0.4 wt%, from 0.5 wt%, from 0.6 wt%, more preferably from 0.7 wt%, from 0.80 wt%, from 0.9 wt%, and even more preferably from 1.0 wt%, or most preferably from 1.1 wt%; and up to 1.2 wt%.

In accordance with the present invention, the iron-chromium based alloys according to the invention may contain nitrogen (N) up to a concentration of 0.15 wt% before the alloys of the present invention become brittle. Preferably, nitrogen however is present only as an incidental impurity below 0.08 wt%, primarily as an incidental impurity from atomization of the present alloys into powders. However, it is one of the benefits of the present alloys, that they show improved functionality even in the presence of oxygen and nitrogen added to the alloys during atomization (contrary to some of the existing alloys for laser-cladding automotive brake discs), thereby retaining the economic benefits of the present alloys.

In accordance with the present invention, there is herein detailed a powder containing an iron-chromium based alloy according to any of the embodiments disclosed herein. In some embodiments of the powder, the powder consists of a powder of an iron-chromium based alloy according to any of the embodiments disclosed herein, in other embodiments the powder comprises a powder of an iron-chromium based alloy according to any of the embodiments disclosed herein together with other powders, particularly a powder containing a hard-phase ceramic carbide additive.

In accordance with the present invention, the powder can be characterized by a powder size-distribution having a size-distribution measured by sieving according to ISO 4497:2020 from 15 µm to 100 µm. In preferred embodiments, the powder size-distribution is from 15 µm to 60 µm providing suitability for use of the powder in a laser-cladding process, the size-distribution preferably being from 20 µm to 55 µm when the powder is intended for use in a laser-cladding process.

In accordance with the present invention, the powder may further contain from 1 wt% to 7 wt% of at least one hard-phase ceramic carbide additive, preferably from 2 wt% to 6 wt%, or more preferably from 3 wt% to 5 wt% of at least one hard-phase ceramic carbide additive. As discussed in the experiments, tungsten carbide (WC) or chromium(II) carbide (Cr₂C₃) were superior to titanium carbides (and nitrides) due to the increased propensity of the titanium hard-phase particles to interact with the alloys of the present invention. Other, suitable hard-phase ceramic carbide additives can be niobium carbide (NbC and Nb₂C) or molybdenum carbide (MoC and Mo₂C), which are also chemically aligned with the present alloys and therefore can be added, even if they may in part become dissolved in the alloy matrix during laser cladding. In preferred embodiments, the at least one hard-phase ceramic carbide additive is one or both of either tungsten carbide (WC) or chromium(II) carbide (Cr₂C₃).

Finally, there is herein in accordance with the present invention detailed an object carrying a monolayer formed by laser cladding using a powder according to any of the herein detailed embodiments, in particular and preferred, wherein the object is a brake disc, preferably an automotive brake disc.

In the preferred embodiments of the object of the invention carrying a monolayer according to the invention, the monolayer is from 50 µm to 500 µm thick, preferably from 60 µm to 450 µm, preferably from 70 µm to 400 µm, more preferably from 80 µm to 350 µm, more preferably from 100 µm to 300 µm, even more preferably from 125 µm to 250 µm, and most preferably from 150 to 200 µm thick. In other embodiments, the monolayer according to the invention is from 150 µm to 500 µm, preferably from 175 µm to 400 µm, more preferably from 200 µm to 300 µm, and most preferably from 225 µm to 275 µm thick.

### EXAMPLES

### Experimental:

### Coated monolayers having a uniform composition:

Alloy compositions in accordance with the present invention were prepared by pre-alloying by melting of the constituent elements followed by atomization. Where not otherwise indicated atomization was by gas atomization but the alloys are designed to be possible to water atomized. In a few experiments vacuum gas atomization was performed. The prepared powder after atomization was sieved using a cut from 20 µm to 53 µm (as measured according to ISO 4497:2020: Metallic powders - Determination of particle size by dry sieving) suitable for use in the laser cladding processes of the present experiments.

The alloys prepared in accordance with the present study are given in Table 1. In the table, a range of exemplary alloy compositions of the invention are detailed which were used for the herein reported experiments. Composition C1 details the minimum useful compositions of the present alloys.

Compositions C2 to C5 details further developments of the alloys exemplifying the further optional elements of the present alloys. A few of the alloys listed in the table were not analyzed for their sulfur and nitrogen content (n.m. - not measured). However, the stock materials used were identical across the experiments as well as the atomization process, and the sulfur and nitrogen contents are considered on par with the content in the measured alloys.

**Table 1: Composition of monolayer coatings in present tests.**

| **Sample** | **C** | **S** | **Mo** | **v** | **Cr** | **Si** | **Mn** | **Fe** | **Al** | **Ti** | **O** | **N** | **Nb** | **B** |
|---|---|---|---|---|---|---|---|---|---|---|---|---|---|---|
| **Prior art alloys:** | | | | | | | | | | | | | | |
| SFSS | 0.015 | 0.006 | 3.80 | - | 26.0 | 0.54 | 0.060 | Bal | | | 0.189 | 0.034 | 0.68 | |
| SFSS | 0.014 | 0.006 | 4.00 | - | 26.3 | 0.50 | 0.040 | Bal | | | 0.107 | 0.030 | 0.73 | |
| Fe22Cr6Al | 0.054 | 0.004 | - | - | 21.8 | - | - | Bal | 6.10 | | 0.047 | 0.018 | 0.00 | 0.00 |
| Fe22Cr6Al | 0.024 | 0.003 | - | - | 21.6 | - | - | Bal | 6.20 | | 0.039 | 0.018 | 0.00 | 0.00 |

| **Alloys prepared and tested in the present study but found unsatisfactory:** | | | | | | | | | | | | | | |
|---|---|---|---|---|---|---|---|---|---|---|---|---|---|---|
| **T-1** | 0.121 | 0.013 | 4.8 | | 17.4 | 1.20 | 1.30 | Bal | | | 0.045 | 0.191 | 1.00 | 0.91 |
| **T-2** | 0.10 | n.m. | 2.01 | | 17.4 | 1.09 | 0.32 | Bal | | | 0.03 | n.m. | 0.95 | 0.47 |
| **T-3a** | 0.116 | 0.006 | | 0.76 | 17.5 | 1.10 | 0.42 | Bal | | | 0.024 | 0.194 | 1.00 | 0.93 |
| **T-3b** | 0.102 | 0.006 | | 0.80 | 17.5 | 1.14 | 0.34 | Bal | | | 0.039 | 0.192 | 1.04 | 0.45 |
| **T-3c** | 0.116 | 0.005 | | 0.49 | 17.5 | 0.93 | 0.32 | Bal | | | 0.031 | 0.182 | 1.00 | 0.51 |
| **T-3d** | 0.105 | 0.005 | | 0.52 | 17.7 | 0.94 | 0.30 | Bal | | | 0.034 | 0.158 | 1.05 | 0.53 |

| **Alloys according to the invention:** | | | | | | | | | | | | | | |
|---|---|---|---|---|---|---|---|---|---|---|---|---|---|---|
| **Comp. 1** | **0.10** | | | | **17.7** | **1.0** | **0.4** | **Bal** | | | | | **1.0** | **0.50** |
| **C-1a** | 0.097 | 0.0050 | | | 17.7 | 1.03 | 0.36 | Bal | | | 0.029 | 0.030 | 0.99 | 0.50 |
| **C-1b** | 0.101 | 0.0040 | | | 17.9 | 1.10 | 0.40 | Bal | | | 0.029 | 0.032 | 1.00 | 0.47 |
| **C-1c** | 0.104 | 0.0040 | | | 17.5 | 0.99 | 0.41 | Bal | | | 0.028 | 0.021 | 1.05 | 0.42 |
| **C-1d** | 0.114 | 0.0039 | | | 17.6 | 0.92 | 0.41 | Bal | | | 0.027 | 0.021 | 1.10 | 0.48 |
| **C-1f** | 0.106 | 0.0037 | | | 17.4 | 0.98 | 0.40 | Bal | | | 0.032 | 0.020 | 1.06 | 0.46 |
| **C-1g** | 0.129 | 0.0061 | | | 17.5 | 1.08 | 0.74 | Bal | | | 0.042 | 0.025 | 1.00 | 0.46 |
| **C-1h** | 0.119 | 0.0055 | | | 17.6 | 0.95 | 0.37 | Bal | | | 0.024 | 0.020 | 1.00 | 0.49 |
| **C-1i** | 0.124 | 0.0053 | | | 17.6 | 0.96 | 0.37 | Bal | | | 0.030 | 0.023 | 1.00 | 0.50 |
| **C-1j** | 0.115 | 0.0081 | | | 17.9 | 1.10 | 0.42 | Bal | | | 0.030 | 0.020 | 0.97 | 0.51 |
| **C-1k** | 0.110 | 0.0062 | | | 17.8 | 1.10 | 0.41 | Bal | | | 0.032 | 0.022 | 1.00 | 0.51 |
| **C-11** | 0.112 | 0.0057 | | | 17.7 | 1.10 | 0.33 | Bal | | | 0.026 | 0.021 | 1.00 | 0.51 |
| **Comp. 2** | **0.14** | | | | **18.0** | **1.1** | **0.6** | **Bal** | **0.6** | | | | **1.0** | **0.5** |
| **C-2a** | 0.142 | 0.0048 | | | 18.0 | 1.10 | 0.61 | Bal | 0.64 | | 0.026 | 0.046 | 1.00 | 0.56 |
| **C-2b** | 0.134 | 0.0054 | | | 17.7 | 1.20 | 0.66 | Bal | 0.61 | | 0.044 | 0.032 | 1.00 | 0.53 |
| **C-2c** | 0.15 | n.m. | | | 18.2 | 1.1 | 0.6 | Bal | 1.2 | | n.m. | n.m. | 1.0 | 0.5 |
| **C-2d** | 0.15 | n.m. | | | 18.2 | 1.1 | 0.6 | Bal | 1.2 | | n.m. | n.m. | 1.0 | 0.5 |
| **Comp. 3** | **0.10** | | | | **17.5** | **1.0** | **0.3** | **Bal** | | **0.25** | | | **1.1** | **0.5** |
| **C-3a** | 0.11 | n.m | | | 17.7 | 1.05 | 0.30 | Bal | | 0.20 | 0.07 | n.m. | 1.10 | 0.50 |
| **C-3b** | 0.09 | n.m | | | 17.6 | 1.05 | 0.30 | Bal | | 0.30 | 0.07 | n.m. | 1.08 | 0.50 |
| **Comp. 4** | **0.10** | | **1.0** | | **17.5** | **1.0** | **0.3** | **Bal** | | **0.3** | | | **1.1** | **0.5** |
| **C-4** | 0.09 | n.m. | 1.04 | | 17.6 | 1.05 | 0.30 | Bal | | 0.3 | 0.07 | n.m. | 1.10 | 0.50 |
| **Comp. 5** | **0.10** | | | | **17.5** | **1.0** | **0.3** | **Bal** | | **0.6** | | | **2.0** | **0.5** |
| **C-5** | 0.11 | n.m. | | | 17.5 | 1.07 | 0.30 | Bal | | 0.53 | 0.08 | n.m. | 1.95 | 0.50 |

Also detailed in Table 1 are some alloys found not useful in the context of the present scope. In general, it was found in the experiments that addition of vanadium or increased amounts of molybdenum together with intentionally added nitrogen in the above given concentrations led to brittle coating layers, and the approaches with vanadium and/or molybdenum were abandoned. This is surprising in the context, as normally both molybdenum and vanadium are considered useful for creating defect-free cladding-layers, in particular for suppressing solidification cracking. Contrary to this, c.f. composition C4, when the molybdenum (Mo) content was lower than 1.2 wt% molybdenum became a neutral element in the present coatings, which could replace iron to the extent listed without otherwise influencing the coating quality.

Advantageously, with the compositions of the invention, oxygen and nitrogen, which become incorporated into the alloys of the invention during atomization, as well as sulfur, which was present in the raw materials as an incidental impurity, did not influence the outcome of the coating processes. This independence of the alloys of the present invention on the atomization process for oxygen and nitrogen is highly advantageous as this allows for standard processing of the alloys of the invention without having to take special precautions to avoid contamination with either of these two elements during alloying and atomization.

### Coated monolayers with hard-phase additives:

In further experiments, coated monolayers with hard-phase additives were tested for improvements to hardness/wear resistance of the coated monolayers, in accordance with the compositions given in Table 2 below.

Fe22Cr6Al, and various titanium carbides, such as Angular TiC, Ti(C,N) and/or FeCr + TiC, which are currently being evaluated by brake disc producers for enhancing bi-layer coating solutions, were selected for testing herein as possible hard-phase additives to increase the hardness/wear resistance of the present monolayer coating solutions. Tungsten carbides, such as e.g., Fe22Cr6Al + WC, were also included in the test plan, as well as an example of a chromium carbide, FeCr + Cr₃C₂.

**Table 2: Composition of additives, incl. hard-phase additives**

| **Additive** | ***No.*** | **C** | **Mo** | **W** | **Cr** | **Si** | **Fe** | **Al** | **Nb** | **B** | **N** | **Ti** |
|---|---|---|---|---|---|---|---|---|---|---|---|---|
| | | **wt%** | **wt%** | **wt%** | **wt%** | **wt%** | **wt%** | **wt%** | **wt%** | **wt%** | **wt%** | **wt%** |
| **Fe22Cr6Al** | **#1** | <0.03 | - | - | 22.0 | - | Bal | 6.1 | - | - | | |
| **TiC** | **#2** | 20 | | | | | | | | | | Bal |
| **Ti(C,N)** | **#3** | 10 | | | | | | | | | 10 | Bal |
| **FeCr + TiC** | **#4** | 14.6 | - | - | 7.22 | - | 17.15 | | | | | Bal |
| **Fe22Cr6Al + WC** | **#5** | 5.5 | | Bal | 3.1 | | 10.9 | 0.95 | | | | |
| **FeCr / Cr3C2** | **#6** | 4.8 | 2.0 | 3.0 | Bal | 0.9 | 17.0 | - | 0.5 | 0.8 | | |

The resulting powder mixes that were tested in the experiments are given in Table 3 below.

**Table 3: Monolayers compositions with various additives**

| **Test No.** | **Powder Mixes** |
|---|---|
| **1.** | Composition C1 + 1 wt% Fe22Cr6Al |
| **2.** | Composition C1 + 5 wt% TiC |
| **3.** | Composition C1 + 1 wt% Fe22Cr6Al + 5%TiC |
| **4.** | Composition C1 + 5 wt% Ti(C,N) |
| **5.** | Composition C1 + 1 wt% Fe22Cr6Al + 5%Ti(C,N) |
| **6.** | Composition C1 + 5 wt% Fe22Cr6Al-WC |
| **7.** | Composition C1 + 5 wt% Cr₃C₂-FeCr |

### Laser Cladding Process:

Initial laser cladding trials were performed using a HighNo 4 nozzle with 1.58 mm Φ laser spot both on nodular cast iron bars and on lamellar cast iron brake discs.

As it was found that the HighNo4-nozzle used in the experiments did not sufficiently emulate production conditions at a brake manufacturer due to the small spot-size and low laser power, a new jet-nozzle was bought from BLC Laser Cladding GmbH. This nozzle allows to clad with a larger spot size and a higher power compared to HighNo 4 used for tests. All results reported hereafter describe coating trials performed using the BLC nozzle.

Ventilated lamellar cast iron brake discs from the aftermarket were used for the experiments.

Several laser cladding parameters were tested and optimized to the possible extent for each material combination being aware that laser power and the powder feed rate were lower than what typically used for industrial coating of brake discs. This effect is visible in the experiments, where some artifacts of the lower than optimal laser power and feed rate can be observed in some of the experiments.

Prior to laser cladding, the brake discs were cleaned to remove residuals of, particularly, oil from the manufacturing process. This was done either by washing in a non-oxidizing organic solvent, such as acetone, or by burn-off by heating in vacuum for 2h at 450°C. In the present experiments, the outcome for thoroughly cleaned brake discs were identical irrespective of the cleaning method.

A factor well-known in the art for significantly influencing the cladding process, in particular for causing formation of large pores in the cladding layers, is the presence of open graphite lamellas embedded at the interface of cast iron brake disc substrates. Such graphite deposits are prone to react with any oxygen contained in the cladding feed material in the melt pool.

The present experiments were performed without previous treatment of the discs for graphite passivation and with residual oxygen from the atomizing process contained in the feed material. It is a significant advantage of the present alloys that disadvantageous effects of the lack of graphite passivation and/or the presence of oxygen in low concentrations from the atomization process are much reduced. Thereby manufacturing costs can be lowered without endangering cladding bonity.

Laser cladding was performed from the inner towards the outer diameter and the brake disc surface was approx. 25°C, at cladding start. As pre-heating of the brake discs was not possible at the current test facility, it was decided to clad one side after the other, thereby (since the cladding process causes heating of the brake disc) to gain some insight into the effect of object temperature on the cladded objects, in particular to see if raised disc temperature would help suppressing cooling crack formation for some specific powders. In this way the temperature of the second cladded side was approx. 80-100°C, at cladding start.

Optimized laser cladding parameters used in the present experiments are reported in Table 4 below. These sets of parameters were found to represent an overall best for the investigated powders in the given experimental setup, wherein the BLC nozzle was used.

**Table 4: Optimized cladding conditions used in experiments**

| **Laser Power [W]** | **Clad speed [m/min]** | **Powder flow [g/min]** | **Spot Ø [mm]** | **Stand off [mm]** | **Track off set [mm/s]** | **Overlap [%]** | **Shield gas [l/min]** |
|---|---|---|---|---|---|---|---|
| **5000** | 90 | 55 | 2 | 16 | 0.2 | 90% | 9 |
| **5600** | 90 | 50 | 2 | 25 | 0.2 | 90% | 9 |

### Evaluation procedure:

After cladding, the brake discs were:
- Checked for cracks on the coating surface by visual inspection under magnification.
- Cut perpendicular to the cladding direction and one cross section from each side investigated by light optic microscope (LOM).
- Tested for resulting coating hardness (HV0.3), including measuring the matrix hardness for composite coatings consisting of a metallic matrix and a hard phase.
- Tested for corrosion in NSS according to ASTM B117 neutral salt spray test, current version as of 2025, for 24 hours using a 5 wt% NaCl-solution.
- Analyzed by SEM to better understand the coating microstructure and properties.

### RESULTS

### Crack formation in prior art alloys and present alloys

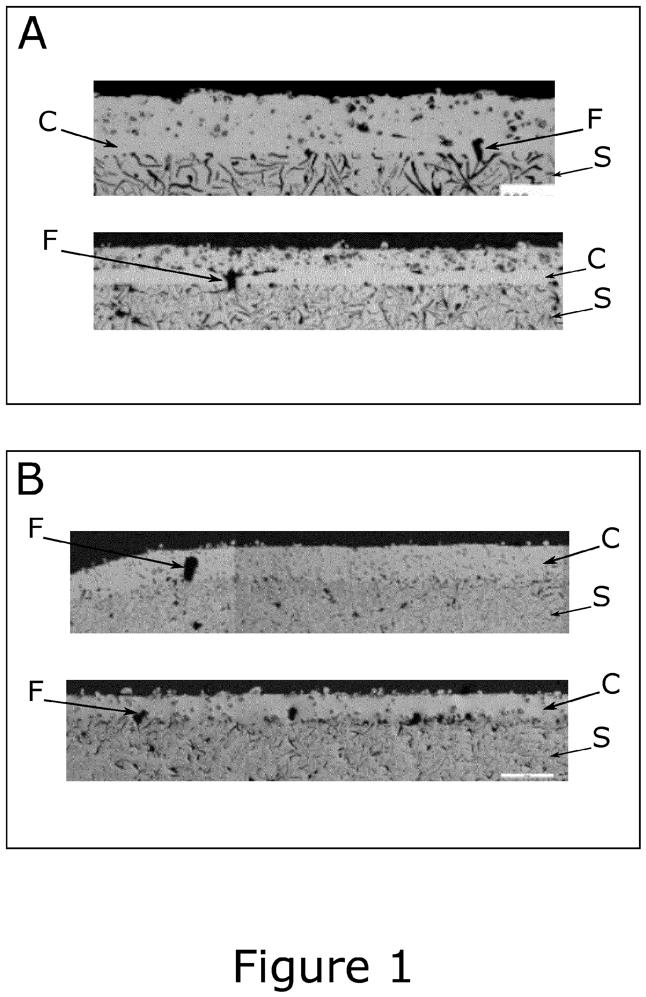

In Figure 1 are shown examples of the abovementioned defects causing problems with laser cladding brake discs. In the shown examples residual graphite deposits in the brake disc reacts with oxygen during the cladding process, thereby forming a gas bubble which expands through the solidifying cladding layer causing a complete or partial disruption of the cladding layer. The examples in Figure 1A show a traditional bi-layer coating solution (thickness pr. layer 200 µm) to the present deposition problem, wherein gas-caused disruption (F) of the first layer (C) coated onto the brake disc substrate (S) is compensated for by the second cladding layer. The examples in Figure 1B show the outcome of coating using a marketed alloy (SFSS) under the herein detailed conditions. Also, for the marketed alloy are gas-caused disruptions (F) of the coating layer (C) visible (thickness 400 µm), however throughgoing disruptions were not observed in the present experiments. In both experiments a 5 wt% TiC hard-phase particulate was added to the outermost cladding layer for simulating a final use product.

In order to counter these observed drawbacks of the cladding alloys currently on the market, investigators have tended to focus on very low content oxygen cladding alloys, which however are more costly to produce than alloys which can be atomized, particularly water atomized, without taking particular precautions against contamination with oxygen during the atomization process. The alloys of the present invention are advantageous in that they can be manufactured following normal atomization procedures, in particular for protecting the oxygen-sensitive elements, particular Ti, Al, and Nb, during the atomization process.

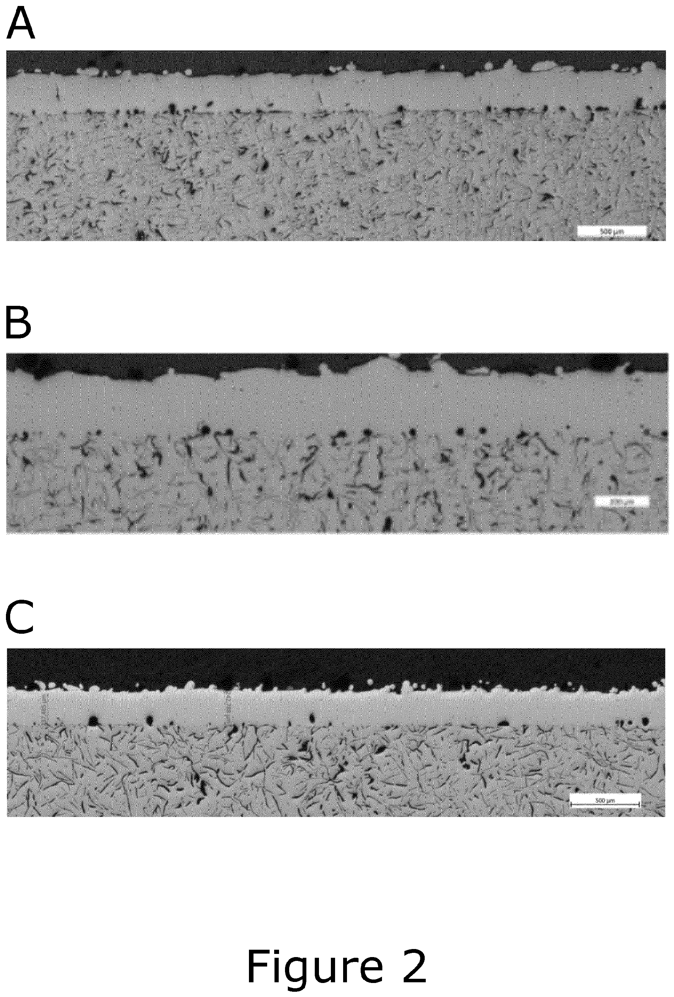

E.g., the SFSS-alloy studied herein (which was manufactured by the present inventors for the present study) and the oxygen content reported herein for the SFSS-alloy is the content as prepared by atomization using the same atomization conditions as used for the alloys of the present invention. However, the alloys of the present invention contain about a third of the oxygen contained in the atomized powders used for cladding compared to the SFSS-alloy, even though they were atomized under the same conditions. Nevertheless, the oxygen concentration of the present alloys was low enough that gas-bubble caused defects were either not observed or significantly diminished in size and/or number (depending on the final alloy composition) providing a significantly improved cladding layer over the comparative art, c.f. Figure 2.

As shown in Figure 2, it is evident that the alloys of the present invention suppress gas-bubble caused defects, while not completely eliminating these. This result is quite surprising given the limitations in the current study in laser power etc., as discussed above. And while not completely suppressing such defects, the cross-sections clearly show that the defects are localized at the interface between the substrate (brake disc) and the cladding layers and are not (significantly) penetrating into the cladding layer itself, contrary to the prior art alloy, where under the same conditions gas-bubble caused defects can penetrate the cladding layer.

It can also be seen in Figure 2A, how the base alloys of the present invention are prone to solidification cracking when laser clad at suboptimal conditions. While this potentially can be remedied in a marketed product with optimization of the cladding parameters, this is not fully optimal. However, as shown in Figures 2B and 2C, addition of one or both of the optional elements, aluminum (Al) and/or titanium (Ti), provides a remedy for this problem, also at the present experimental conditions, providing alloys of the present invention which are essentially without observable solidification cracking.

The experiments showed that 0.6 wt% aluminum was as efficient as 1.2 wt% aluminum in preventing solidification cracking. Aluminum could be added without adjusting other elements in the alloys besides correcting for the total mass of the composition by adjusting the amount of iron present.

Contrary to this, addition of titanium (Ti) was found to mandatorily require the presence of boron in the alloys or nozzle-clogging during gas atomizing would occur. Likewise, co-adjustment of titanium with niobium was found to be optimal, such that the ratio of niobium (Nb) to titanium (Ti) preferably had to be adjusted to be from 1.5 to 6.0.

Co-alloying aluminum and titanium with the alloys of the invention was found possible, showing inhibition of solidification cracking as expected. But a synergistic effect of co-alloying with both of these two elements was not observed, as will be discussed below.

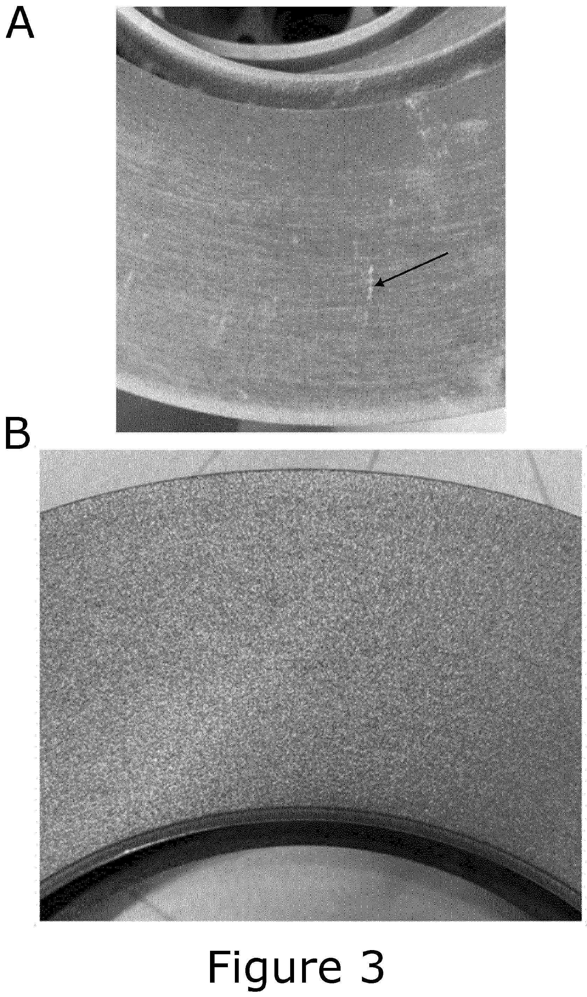

In Figure 3 are reported the results of visual inspection of a coated brake disc with the prior art SFSS-alloy **(A)** showing a significant number of surface cracks (discoloration lines in the surface), the largest having been indicated by an arrow in Figure 3A. In contrast thereto, the brake disc coated with an alloy according to composition C1 **(B)** shows no visible surface cracks at all. Instead, the surface presents completely homogeneous in visual inspection, indicating that although the alloys according to composition C1 in the experiments were prone to microscopic solidification cracking, the formed solidification cracks did not lead to macroscopic observable surface cracks, demonstrating the suitability of the present alloys for the desired purposes.

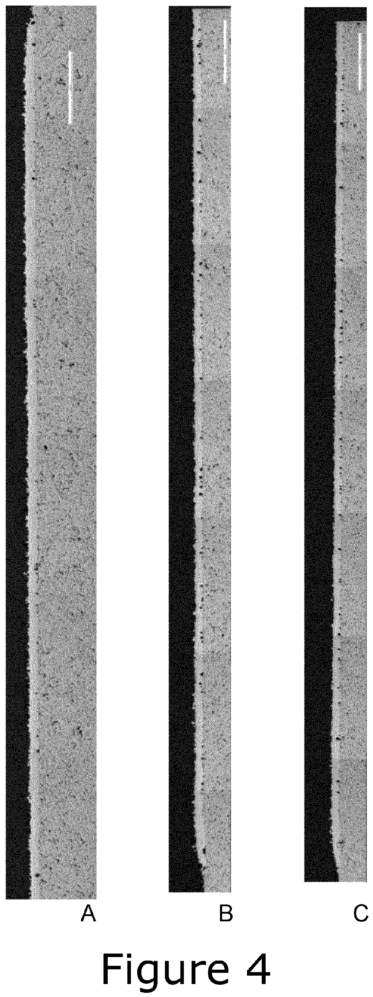

In Figure 4, whole disc cross-sections are shown for the alloys of composition C3 **(A),** composition C4 **(B),** and composition C5 (**C**). As can be seen in the figure, for all three shown alloys, nowhere across the cladding layers can throughgoing cracks be spotted, even if there are some gas bubble protrusions at the interface to the brake disc substrate.

### Coating hardness of present alloys

The surface hardnesses of the present cladded surfaces were measured according to Vickers' Hardness HV0.3. The hardnesses were found to be without large variations in hardness across the surfaces, averaging 330-340 units within an accuracy of ±10 units.

For the intended purpose of brake disc coatings, this hardness is in the lower range, but comparable to other cladding alloys known in the art. For commercial purposes a Vickers' HV0.3 hardness of about >300 units or higher is preferable, if adequate corrosion resistance can be achieved. The optimal hardness range for the present alloys is from HV0.3 300 to 350, preferably from HV0.3 320 to 350.

For this reason, it is customary to add hard-phase particles to the feed material before forming the cladding layers. In the present experiments hard-phase particles were added in accordance with the scheme indicated in Table 3 as reported and discussed below.

### Alloying with aluminum and titanium

In the first set of tests, alloys of composition C1 were co-cladding with hard-phase particles of Table 3. In these initial tests it was surprisingly found that when titanium carbide hard-phase particles were tested directly with the alloys of composition C1, the titanium carbide caused the quality of the formed cladding layers to dwindle, even if the matrix hardness would increase to an acceptable HV0.3 of approx. 350. Contrary to this, the aluminum containing hard-phase additives would cause the observed solidification cracking of composition C1 coatings to disappear, but without causing a change of the measured Vickers' hardness, which stayed at around 330 HV0.3.

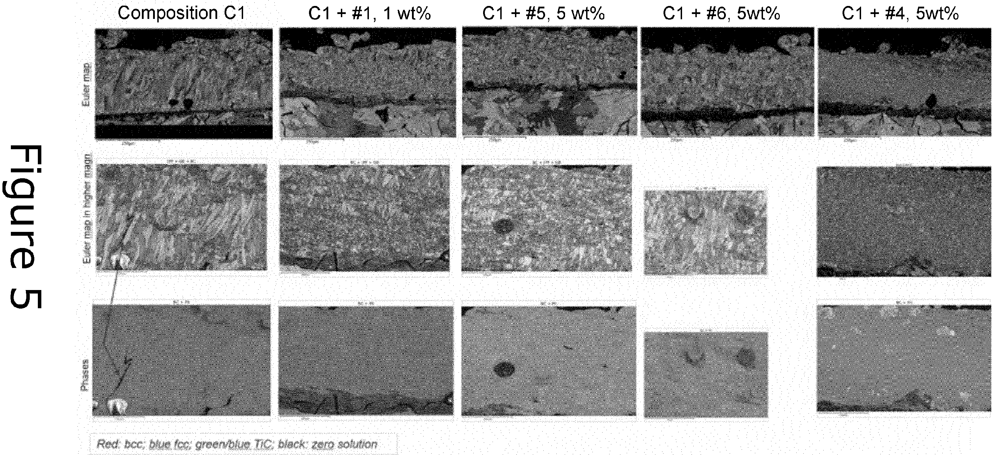

Using SEM (c.f. Figure 5), it was confirmed that both aluminum and titanium from the hard-phase particles dissolve at least partially and become incorporated into the cladding alloys.

In light of these findings, it was decided to pre-alloy aluminum, titanium and/or mixtures thereof into the alloys of composition C1. Thereby alloying inhomogeneities for aluminum and titanium are avoided caused by the localized availability of the hard-phase particles in the combined cladding feed of composition C1 alloy and hard-phase particles.

The observed benefits on the cladding quality were reproduced, proving the benefits of the co-alloying alloys according to the broadest formulation of the present alloys with either aluminum or titanium, i.e. suppression of solidification cracks compared to the alloys of composition C1. As shown in Figure 5, this shift is visible in the Euler-map as a shift from an initial elongated primary grain structure (composition C1) towards the primary grains being equiaxed and significantly smaller.

In Figure 6, this effect on the alloying microstructure is illustrated in more detail for the addition of titanium (Ti) to the alloys of composition C1, C1 with 5 wt% TiC-FeCr, and compositions C3 and C5. The Euler-maps clearly show how the presence of titanium in the cladding layers causes the primary grains to diminish to a size which is too small to cause solidification cracking during cladding. Notice the difference in the scale bars between the Euler-map for composition C1 and the compositions containing titanium. These were recorded at double magnification compared to composition C1 in order to properly visualize the formed, small primary equiaxed grains when titanium is present. As such, Euler-mapping was found to be a very sensitive tool for documenting the formation of primary equiaxed grains during melt solidification suitable for use in assessing other metallic additives for their suitability as additives in the present invention.

As titanium was observed to be a stronger promoter of primary equiaxed grain formation during melt solidification than aluminum (about a factor 10 smaller grains with titanium), it is also not surprising that co-alloying with both aluminum and titanium did not show improvements beyond those found for titanium alone. However, a correlation to the formation of Al₂O₃ in the melt pool was observed, wherein these oxides hinder the growth of the desired primary equiaxed grains, and in oxygen-reduced laser cladding, aluminum was as effective as titanium in promoting the desired fraction of primary equiaxed grain formation during melt solidification to suppress solidification cracks.

Accordingly, the experiments clearly document that while the alloys of the present invention in themselves are very suitable for their intended purpose, it is highly preferable to add at least one metallic element, such as either aluminum and/or titanium, that promotes primary equiaxed grain formation during melt solidification in order to prevent, either completely or partially, solidification cracking in the cladding layers formed by the alloys of the present invention.

### Salt spray tests:

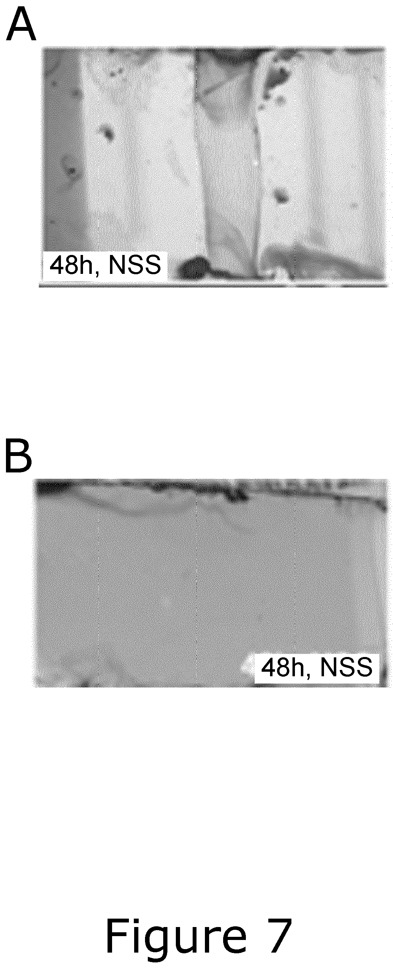

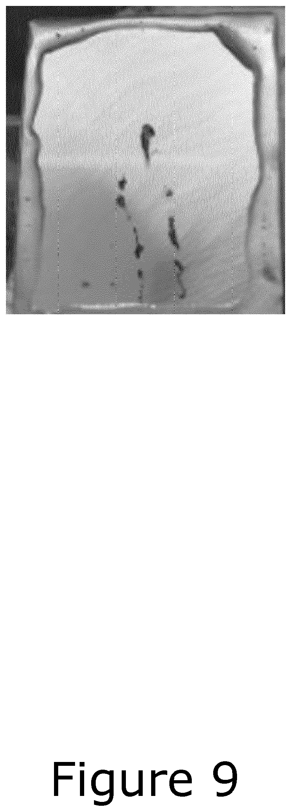

Figures 7 and 9 show results for the salt-testing experiments for cross-sections (Figure 7) of composition C1 and C2 after 48 hours of salt spraying according to NSS, and surface (Figure 9) after 24 hours. In the experiments the resistance to corrosion under these accelerated conditions is clearly visible. In the cross-sections no throughgoing corrosion is visible, but some discoloration is visible towards the cast iron brake disc side as expected from cast iron corrosion. In the surface view in Figure 9, the overall surface quality of the present coatings is clearly visible. Unfortunately, some pitting locations are still present, which was shown in other experiments to be unrelated to the alloy chemistry but rather an artifact of the insufficient laser capacity at the present test facilities.

### Hard-phase additives:

Tests were conducted with the above-described alloys and hard-phase additives were conducted. In the experiments, aluminum and/or respectively titanium were either already co-alloyed into the examined alloys, and hard-phase particles such as 4 wt% tungsten carbide (WC), 5 wt% titanium nitride (TiN) or titanium carbide (TiC), and 5wt% chromium carbide (Cr₂C₃), or (for aluminum) allowed to be added as a co-alloying factor in accordance with Table 3, samples 6 and 7. The hard-phase particles were admixed to the atomized alloy particles separately after atomization but prior to laser cladding and were added as particles having the same or slightly smaller size distributions than those of the cladding particles. In light of the reducing effect on the promotion of primary equiaxial grains formation during melt solidification from the presence of aluminum oxides, no experiments were conducted with the ceramic corundum (α-Al₂O₃).

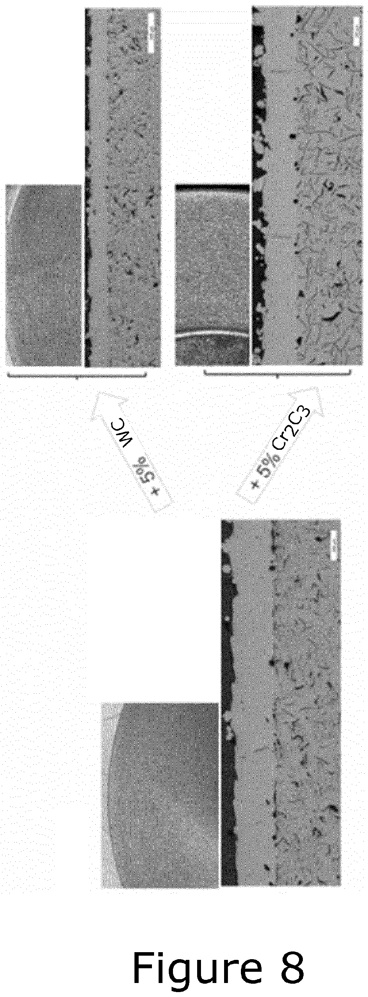

When mixing alloys of the invention in accordance with the experiments of Table 3, samples 6 or 7 (c.f. Figure 8), it was observed that dense coatings with no cracks on the surface were formed, no solidification cracks visible in the cross section, limited porosity at the interface with the cast iron substrate, a matrix hardness of approx. 370 HV0.3 vs. 330 for the alloys themselves, which is an acceptable level for the intended application, together with limited corrosion pit/discoloration formation after 24 h in NSS (c.f. Figure 9). The latter observation was found to be related to the processing parameters, particularly the suboptimal laser strength, rather than to the coating chemistry.

In general, it was found that non-reactive hard-phase additives, such as tungsten carbide (WC) and chromium carbide (Cr₂C₃), performed superior to reactive hard-phase additives, particularly the titanium containing additives, in increasing the surface hardness without negatively influencing the quality of the cladding layer and the corrosion resistance.

### Columnar to Equiaxed transition as simulated

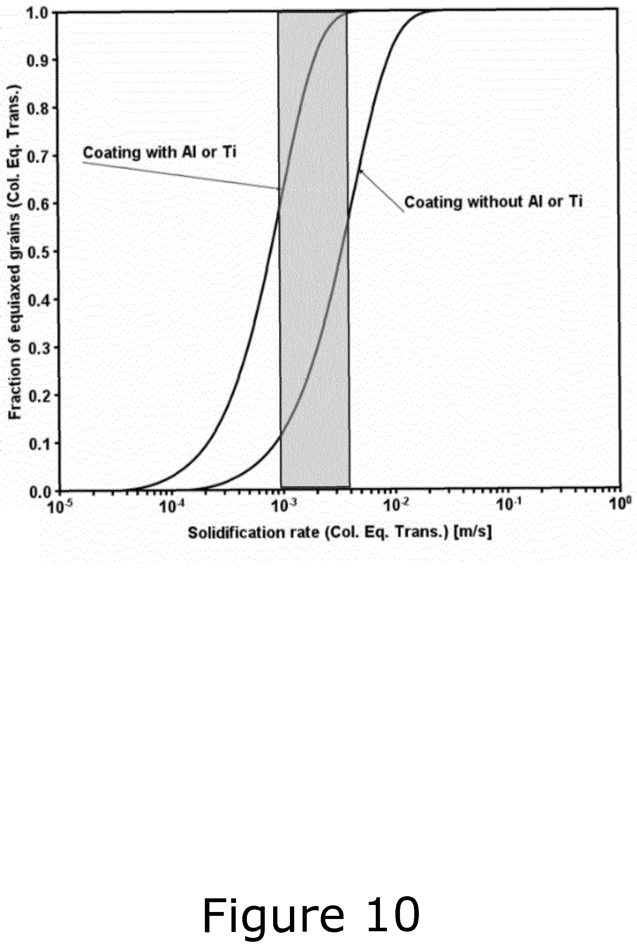

In Figure 10 there is shown a simulation of the transition from columnar crystallites to equiaxed crystallites as a consequence of the addition of aluminum and/or titanium.

The Figure shows the Columnar to Equiaxed Transition (CET) for 2 alloys: one without addition of Al or Ti, the other one with addition. This plot shows the fraction of equiaxed grains formed during cooling for different solidification rates at a constant thermal gradient of 10⁶ K/s. For the highspeed laser cladding process, the solidification rate varies between 10⁻³ to 10⁻² m/s according to calculations and literature. This window is marked in the plot with the grey box.

It can be seen that for the solidification rates for this process (10⁻³ - 10⁻² m/s) the alloy without Al or Ti addition, has much lower equiaxed fraction of grains compared to the one with the addition which is almost entirely equiaxed. Coating with the alloy with Al or Ti will leads to almost fully equiaxed grain structure in the regions with lower solidification rate (edges of the melt pool). Even at regions with very high solidification rates (centre of the melt pool) a large amount of equiaxed grains form, i.e. 0.6. For the alloy without Al or Ti, the fraction of equiaxed grains is much lower and, in some areas, it is almost fully columnar.

### Overall Conclusions:

In the present experiments it was found that alloys of the present invention are very useful for surface cladding cast iron brake discs for thereby providing a corrosion resistant monolayer on these brake discs in thicknesses from 80 µm to 400 µm as required by the industry. Addition of a metallic promoter of primary equiaxed grain formation during melt solidification, such as aluminum or titanium, was found to improve the coating quality. At the same time, it was shown that it was possible to add hard-phase particles during laser cladding, thereby preparing surface cladding monolayers having the corrosion resistance and the surface hardness required by industry for brake discs.

### CLOSING COMMENTS

Although the present invention has been described in detail for purpose of illustration, it is understood that such detail is solely for that purpose, and variations can be made therein by those skilled in the art in practicing the claimed subject matter, from a study of the drawings, the disclosure, and the appended claims.

The term "comprising" as used in the claims does not exclude other elements or steps. The indefinite article "a" or "an" as used in the claims does not exclude a plurality. A single processor or other unit may fulfill the functions of several means recited in the claims. A reference sign used in a claim shall not be construed as limiting the scope.

## Claims

1. An iron-chrome based alloy consisting of, by total weight of the alloy:
| | |
|---|---|
| chromium (Cr) : | 16.5 wt% - 19.5 wt%, |
| silicon (Si) : | 0.65 wt% - 1.35 wt%, |
| manganese (Mn) : | 0.10 wt% - 0.80 wt%, |
| niobium (Nb) : | 0.85 wt% - 2.15 wt%, |
| boron (B) : | 0.35 wt% - 0.65 wt%, |
| carbon (C) : | 0.05 wt% - 0.20 wt%, |
| nitrogen (N) : | below 0.15 wt%, |
and optionally:
| | |
|---|---|
| molybdenum (Mo): | below 1.20 wt%, and/or |
from 0.10 wt% to 2.2 wt% of at least one metallic element promoting equiaxed grain formation during alloy melt solidification;
the balance being iron (Fe) and incidental impurities below 0.2 wt%.

2. The iron-chromium based alloy according to claim 1 containing from 0.10 wt% to 2.2 wt% of at least one metallic element promoting equiaxed grain formation during alloy melt solidification.

3. The iron-chromium based alloy according to either claim 1 or claim 2, wherein the metallic element promoting equiaxial grain formation during alloy melt solidification is selected from one or both of aluminum (Al) or titanium (Ti).

4. The iron-chromium based alloy according to any preceding claim containing at least one of:
| | |
|---|---|
| aluminum (Al) : | 0.15 wt% - 1.40 wt%, or |
| titanium (Ti) : | 0.10 wt% - 0.80 wt%. |

5. The iron-chromium based alloy according to any preceding claim containing aluminum (Al) from 0.40 wt% to 1.40 wt%, preferably from 0.50 wt% to 1.30 wt%, more preferably from 0.6 wt% to 1.2 wt%.

6. The iron-chromium based alloy according to any of the claims 1 to 5 containing titanium (Ti) from 0.15 wt% to 0.80 wt%, preferably from 0.20 wt% to 0.70 wt%, more preferably from 0.25 wt% to 0.65 wt%.

7. The iron-chromium based alloy according to any preceding claim wherein if titanium (Ti) is present, the ratio of niobium (Nb) to titanium (Ti) is from 1.5 to 6.0, preferably from 2.0 to 4.0.

8. The iron-chromium based alloy according to any preceding claim containing chromium (Cr) from 16.8 wt% to 19.3 wt%; preferably from 17.0 wt% to 19.0 wt%, or from 17.1 wt% to 18.9 wt%; more preferably from 17.2 wt% to 18.8 wt%; or even more preferably from 17.3 wt% to 18.7 wt%.

9. The iron-chromium based alloy according to any preceding claim containing silicon (Si) from 0.70 wt% to 1.30 wt%, or from 0.85 wt% to 1.25 wt%, but preferred from 0.90 wt% to 1.20 wt%, more preferred from 0.95 wt% to 1.15 wt%, or even more preferred from 1.00 wt% to 1.10 wt%.

10. The iron-chromium based alloy according to any preceding claim containing manganese (Mn) 0.25 wt% to 0.70 wt%, more preferred from 0.27 wt% to 0.65 wt%, and even more preferred from 0.30 wt% to 0.60 wt%.

11. The iron-chromium based alloy according to any preceding claim containing niobium (Nb) from 0.90 wt% to 2.10 wt%, more preferred from 0.95 wt% to 2.05 wt%, and even more preferred from 1.00 wt% to 2.00 wt%.

12. The iron-chromium based alloy according to any preceding claim containing boron (B) from 0.40 wt% to 0.60 wt%, or more preferably from 0.45 wt% to 0.55 wt%.

13. The iron-chromium based alloy according to any preceding claim containing carbon (C) from 0.085 wt% to 0.155 wt%, more preferably from 0.090 wt% to 0.150 wt%, or even more preferably from 0.095 wt% to 0.145 wt%.

14. The iron-chromium based alloy according to any preceding claim containing molybdenum (Mo) from 0.05 wt% to 1.20 wt%.

15. The iron-chromium based alloy according to any preceding claim, wherein nitrogen (N) is present only as an incidental impurity below 0.08 wt%.

16. A powder containing an iron-chromium based alloy according to any of the claims 1 to 15.

17. The powder according to claim 16 having a size-distribution measured by sieving according to ISO 4497:2020 from 15 µm to 100 µm.

18. The powder according to either claim 16 or claim 17 further containing from 1 wt% to 7 wt% of at least one hard-phase ceramic carbide additive, preferably from 2 wt% to 6 wt%, and more preferably from 3 wt% to 5 wt%.

19. The powder according to claim 17, wherein the at least one hard-phase ceramic carbide additive is one or both of either tungsten carbide (WC) or chromium(II) carbide (Cr₂C₃).

20. An object carrying a monolayer formed by laser cladding using a powder according to any of the claims 16 to 19.

21. The object according to claim 20, wherein the object is a brake disc, preferably an automotive brake disc.

22. The object according to either claim 20 or claim 21, wherein the monolayer is from 50 µm to 500 µm thick, preferably from 60 µm to 450 µm, preferably from 70 µm to 400 µm, more preferably from 80 µm to 350 µm, more preferably from 100 µm to 300 µm, even more preferably from 125 µm to 250 µm, and most preferably from 150 to 200 µm thick.
